# EUROPEAN PATENT SPECIFICATION

(11) **EP 2 445 171 B1**
(45) Date of publication and mention of the grant of the patent: **08.02.2017**
(21) Application number: 10788782.0
(22) Date of filing: 18.05.2010
(51) Int. Cl.: H04L 29/08, H04L 12/14

(54) **FILE TRANSFER PROTOCOL CLIENT AND IMPLEMENTING METHOD THEREOF**
DATENTRANSFERPROTOKOLL-CLIENT UND VERFAHREN ZU SEINER VERWENDUNG
CLIENT DE PROTOCOLE DE TRANSFERT DE FICHIER ET SON PROCÉDÉ DE MISE EN UVRE

(30) Priority: 17.06.2009 CN 200910108360
(43) Date of publication of application: 25.04.2012
(73) Proprietor: ZTE Corporation, Shenzhen, Guangdong 518057 (CN)
(72) Inventor: LI, Bing, Shenzhen Guangdong 518057 (CN)
(74) Representative: Vogel, Andreas
(86) International application number: PCT/CN2010/072904
(87) International publication number: WO 2010/145386

(56) References cited:
- EP-A2- 1 351 137
- CN-A- 1 477 500
- CN-A- 1 737 753
- CN-A- 101 442 688
- CN-A- 101 594 390
- US-A1- 2004 054 759
- US-B1- 6 985 901

## Description

### Field of the Invention

The present invention relates to a file communication field, in particular to an FTP (File Transfer Protocol) client and an implementing method of the FTP client.

### Background of the Invention

With the development of intelligent network and the increase of service volume, the information quantity of phone bills produced by an SCP (Service Control Point) rises rapidly, and the traditional method of transmitting phone bill information through a message can not satisfy the requirements. At present, it is the general practice that the phone bill information is periodically written into a file at the SCP end, an IMP (Interface Message Processor) periodically downloads a phone bill file from the SCP, and then, an application program processes the phone bill file. As a Unix/Linux operating system does not provide any API (Application Program Interface) function for an FTP operation, the realization thereof requires encoding by the application program according to the FTP protocol specification in an RFC (Request For Comments).

In a related art, the steps of the FTP downloading files are: 1. a client establishes a link with a port 21 of a server, the client sends a user name and a password to the server, and after the verification by the server is passed, an FTP link is established; 2. the client sends a LIST command to acquire a file list of the current directory on the FTP server; 3. the client selects a file from the file list, sends a SIZE command to acquire the size of the file, and sends a RETR command to download a designated file from the FTP server to the client, wherein, during file transmission, a TCP (Transmission Control Protocol) data link needs to be established between the server and the client, and after the file transmission is accomplished, the TCP link needs to be closed; 4. Step 3 is carried out cyclically until all the files in the file list are successfully obtained.

It can be concluded from the description on the FTP steps that it is rather a complicated process to implement the FTP operation by encoding. Moreover, network failure would easily lead to link abnormality, which, thereby, will affect the stability of the FTP application program.

An approach for implementing FTP operations by use of scripting is disclosed in US 6,985,901 B1.

### Summary of the Invention

In view of the problem that it is complicated to implement the FTP operation by encoding as the Unix/Linux operating system does not provide an API function for the FTP operation, the present invention mainly aims at providing an FTP client and a solution for implementing the FTP client so as to at least solve the above problem.

In order to achieve the above object, according to one aspect of the present invention, an implementing method of an FTP client is provided.

The implementing method of an FTP client according to the present invention, applied in a Unix/Linux operating system, comprises steps of: the FTP client writing an FTP operation request which is sent to an FTP server by the FTP client into a script file, wherein the script file is written in a tcl script language; and executing the script file to accomplish the FTP operation request of the FTP client for the FTP server.

After executing the script file, the method further comprises: generating a result file of the script file; judging whether the FTP operation request is successful according to information in the result file; if the FTP operation is successful, continuing generating and executing a script file with a new FTP operation request written therein; if the FTP operation is unsuccessful, ending the current process.

Before generating the result file of the script file, the method further comprises: checking, by using a timeout detection mechanism, whether the result file is generated.

A method for naming the script file is: FTP request type + thread number + current time.tcl.

The FTP client on an interface message processor (IMP) generates script files corresponding to a plurality of service control points (SCPs), and downloads phone bill files in the plurality of SCPs through FTP servers on the plurality of SCPs; or the FTP client on a service management point (SMP) generates script files corresponding to a plurality of SCPs, and uploads service files in the SMP through FTP servers on the plurality of SCPs.

In order to achieve the above object, according to another aspect of the present invention, an FTP client is provided.

The FTP client according to the present invention, applied in a Unix/Linux system, comprises a script generation module and an FTP operation performing module, wherein, the script generation module is configured to write an FTP operation request which is sent to an FTP server into a script file, wherein the script file is written in a tcl script language; and the FTP operation performing module is configured to execute the script file to accomplish the FTP operation request for the FTP server.

The FTP client further comprises: a result file generation module, configured to generate, after the FTP operation performing module executes the script file, a corresponding result file; and a determining module, configured to judge whether the FTP operation request is successful according to information in the result file generated by the result file generation module; if the FTP operation request is successful, continue generating a script file with a new FTP operation request written therein, and call the FTP operation performing module to execute the script file; if the FTP operation request is unsuccessful, end the current process.

The result file generation module is also configured to check, by using a timeout detection mechanism, whether the result file is generated.

The script generation module is also configured to name the script file generated by the script generation module according to the following naming method: FTP request type + thread number + current time.tcl.

In order to achieve the above object, according to still another aspect of the present invention, an interface message processor (IMP) is provided.

The IMP according to the present invention comprises the FTP client, wherein the FTP client is configured to generate script files corresponding to a plurality of service control points (SCPs), and download phone bill files in the plurality of SCPs through FTP servers on the plurality of SCPs

In order to achieve the above object, according to still another aspect of the present invention, a service management point SMP is provided.

The SMP according to the present invention comprises the FTP client, wherein the FTP client is configured to generate script files corresponding to a plurality of service control points (SCPs), and upload service files in the SMP through FTP servers on the plurality of SCPs.

In virtue of the present invention, the FTP client is separated from the application program, the problem that it is complicated to implement the FTP operation by encoding as the Unix/Linux operating system does not provide an API function for the FTP operation is settled, and the complexity when an application program implements an FTP operation is reduced, which effectively enhances the reliability and the stability of the FTP operation.

### Brief Description of the Accompanying Drawings

Figure 1 is a flowchart of the implementing method of the FTP client of an embodiment of the present invention;
Figure 2 is a structural block diagram of the FTP client of an embodiment of the present invention;
Figure 3 is a structural block diagram of the FTP client of a preferred embodiment of the present invention;
Figure 4 is a structural schematic diagram of the IMP and SCP system of a preferred embodiment of the present invention;
Figure 5 is a flowchart of the method of the IMP downloading phone bill files from the SCP according to a preferred embodiment of the present invention;
Figure 6 is a structural schematic diagram of the SMP and SCP system of a preferred embodiment of the present invention.

### Detailed Description of Embodiments

The present invention is detailed with reference to the drawings in combination with the embodiments as follows. It shall be explained that the embodiments in the present application and the features of the embodiments can be combined with each other if there is no conflict.

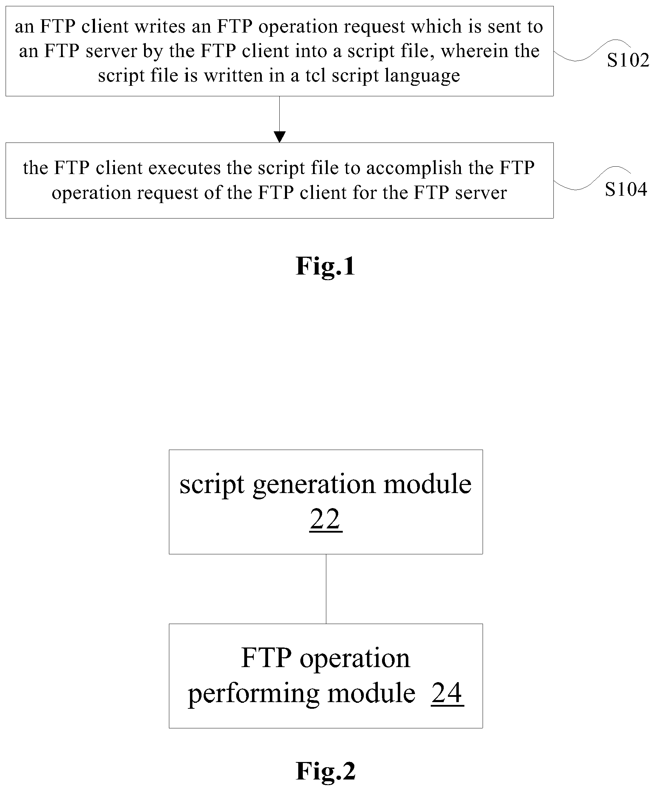

Figure 1 is a flowchart of the implementing method of the FTP client of an embodiment of the present invention. As shown in Figure 1, the method is applied in the Unix/Linux operating system, and the method comprises the following steps:
step S102, an FTP client writes an FTP operation request which is sent to an FTP server by the FTP client into a script file, wherein the script file is written in a tcl script language;
step S104, the script file is executed to accomplish the FTP operation request of the FTP client for the FTP server.

Through the embodiments of the present invention, the FTP client is separated from an application program, the problem is solved that it is complicated to implement the FTP operation by encoding as the Unix/Linux operating system does not provide an API function for the FTP operation, the complexity is reduced when an application program implements an FTP operation, and the reliability and the stability of the FTP operation are effectively enhanced.

Preferably, after step S104, a result file of the script file is generated; it is judged whether the FTP operation request is successful according to information in the result file; if the FTP operation request is successful, it continues generating and executing a script file with a new FTP operation request written therein; if the FTP operation request is unsuccessful, the current process is ended.

Preferably, before generating the result file of the script file, the method further comprises: checking, by using a timeout detection mechanism, whether the result file is generated.

Preferably, the method for naming the script file is: FTP request type + thread number + current time.tcl.

Preferably, the FTP client on an IMP generates a script file corresponding to a plurality of SCPs, and downloads phone bill files in the plurality of SCPs through FTP servers on the plurality of SCPs; or the FTP client on an SMP (Service Management Point) generates a script file corresponding to a plurality of SCPs, and uploads service files in the SMP through FTP servers on the plurality of SCPs.

Preferably, the FTP operation request can include at least one of the following: establishing a link, uploading or downloading a file, command(s) (such as LIST command, RETR command, STOR command, etc.) in the FTP protocol.

Figure 2 is a structural block diagram of the FTP client of an embodiment of the present invention. As shown in Figure 2, the FTP client is applied in the Unix/Linux system, and the FTP client comprises: a script generation module 22 for writing an FTP operation request which is sent to an FTP server into a script file, wherein the script file is written in the tcl script language; and an FTP operation performing module 24, coupled to the script generation module 22, for executing the script file to accomplish the FTP operation request for the FTP server.

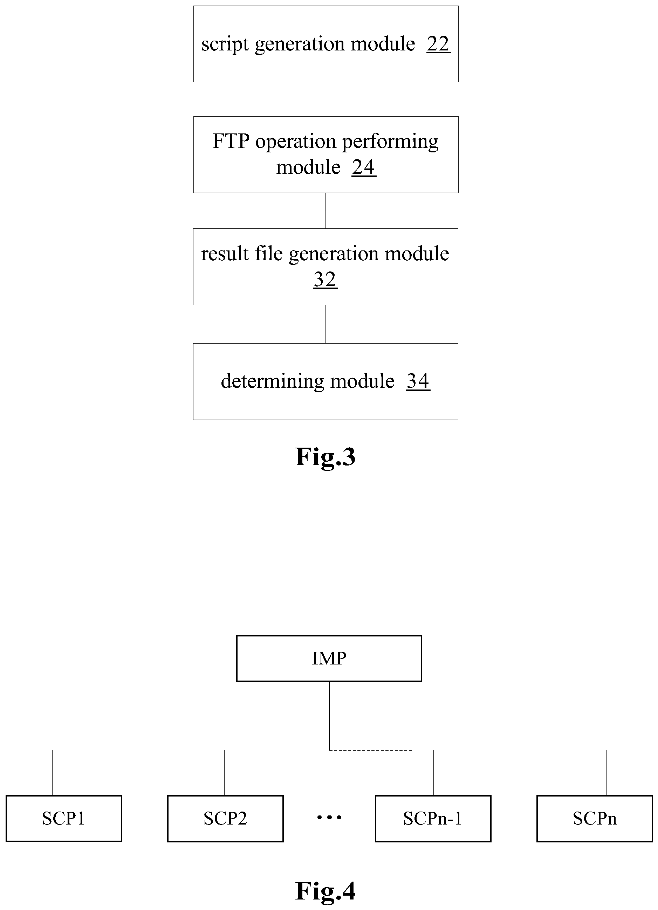

Figure 3 is a structural block diagram of the FTP client of a preferred embodiment of the present invention. As shown in Figure 3, the FTP client further comprises: a result file generation module 32, coupled to the FTP operation performing module 24, for generating, after the FTP operation performing module 24 executes the script file, a corresponding result file; a determining module 34, coupled to the result file generation module 32, for judging whether the FTP operation request is successful according to information in the result file generated by the result file generation module 32; if the FTP operation request is successful, continuing generating a script file with a new FTP operation request written therein, and calling the FTP operation performing module 24 to execute the script file; if the FTP operation request is unsuccessful, ending the current process.

Preferably, the result file generation module 32 is also used for checking, by using a timeout detection mechanism, whether the result file is generated.

Preferably, the script generation module 22 is also used for naming the script file generated by the script generation module according to the following naming method: FTP request type + thread number + current time.tcl.

The preferred embodiments of the present invention can implement a stable, reliable, and concurrent FTP client which is applied in the Unix/Linux operating system. The FTP client is separated from the application program, reduces the impact imposed by the FTP client on the application program, and ensures the stable operation of the application program.

It shall be explained that, as the tcl script language can capture screen output and can input specified character strings according to the screen output, the embodiments of the present invention can be carried out by using the tcl script language. In addition, they can also be carried out by using a standard C language or a C-similar language. Thus, the embodiments of the present invention have good portability.

The present invention is further described in detail in conjunction with the accompanying drawings and the embodiments as follows.

### Embodiment 1

Figure 4 is a structural schematic diagram of the IMP and SCP system of a preferred embodiment of the present invention, which is applicable to the interface message processor system connected with the intelligent network. As shown in Figure 4, the system includes an IMP and a plurality of SCPs, each SCP runs its own service and periodically generates phone bill files, and the IMP periodically downloads the phone bill files from each SCP and processes the phone bill files.

In this preferred embodiment, a phone bill program on the SCP periodically generates phone bill files in a specified directory, a plurality of script generation modules 22 can be started on the IMP, and each script generation module 22 respectively calls the FTP program performing module 24 to download files from the corresponding SCP, wherein the number of the script generation modules 22 is the same as the number of the SCPs, the rule for naming the script file(s) generated by each script generation module 22 can be set as: FTP request type + thread number + current time .tcl.

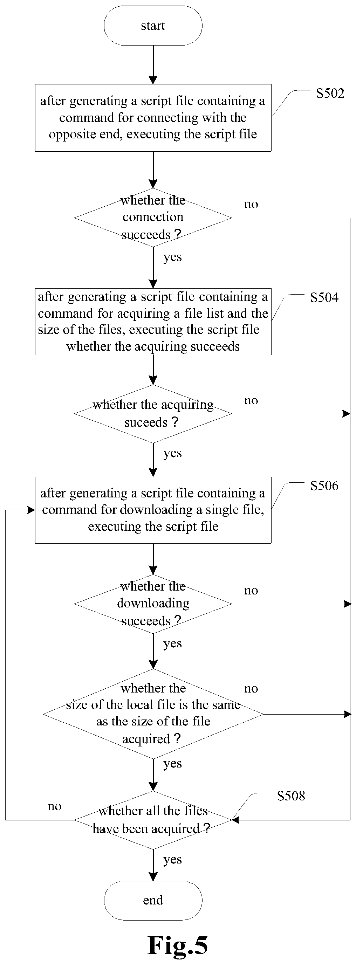

Figure 5 is a flowchart of the method of IMP downloading phone bill files from the SCP according to a preferred embodiment of the present invention. As shown in Figure 5, the method of the FTP client on the interface message processor (IMP) downloading phone bill files from the FTP server on the SCP comprises the steps as follows.
step S502, connecting with the server. Specifically, the script generation module 22 generates a script file, writes the IP address of the server, user name and password into the script file, waits until the FTP operation performing module 24 has finished executing the script file at backstage, obtains from a result file whether the connection succeeds, if yes, continues carrying out the next step; otherwise, ends the process.
step S504, acquiring a file list and the size of the files under a specified directory at the server. Specifically, the script generation module 22 writes the command for acquiring a file list and the size of the files into the script file, waits until the FTP operation performing module 24 has finished executing the script file at backstage, reads from a result file a file list and the size of the files under the directory at the server, if it succeeds, continues carrying out the next step; otherwise, ends the process.
step S506, acquiring a single file. Specifically, the script generation module 22 selects a file from the file list, writes the command for acquiring the file into the script file, waits until the FTP operation performing module 24 has finished executing the script file at backstage, queries from a result file whether the downloading succeeds, if yes, checks whether the size of the file downloaded locally is the same as the size of the file acquired in step S504, if yes, the downloading is deemed successful, otherwise, the downloading fails.
step S508, cyclically acquiring the files in the file list. The script generation module 22 and the FTP operation performing module 24 repeat step S506, until all the files in the file list are acquired.

In the above process, in order to prevent the script generation module 22 from being kept waiting which will result in congestion, it is feasible to check whether the FTP operation performing module generates a result file by using a timeout detection mechanism.

In this preferred embodiment, the tcl script file is used to perform the FTP operations, a plurality of script generation modules 22 generate different script files, such that the FTP operations can be performed parallelly, and the size of the files downloaded are checked, which ensures the correctness of the files.

### Example 2

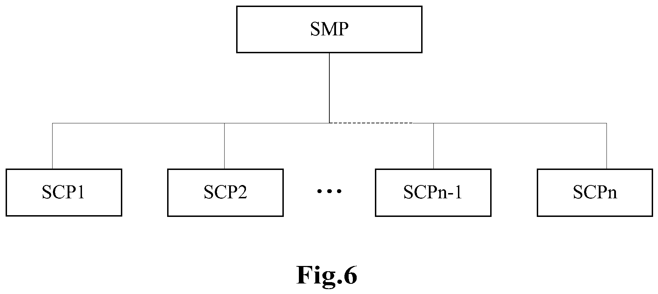

Figure 6 is a structural schematic diagram of the SMP and SCP system of a preferred embodiment of the present invention, which is applicable to the SMP system. As shown in Figure 6, the system includes an SMP and a plurality of SCPs.

In specific implementing process, the process of the SCP loading services can be: the SMP transmits in turn service logic files to each SCP; after the transmission is completed, the SMP sends a message to each SCP to notify the SCP to load services, wherein the message carries the file name of the service to be loaded this time; after receiving the message, the SCP obtains the file name, reads a service file uploaded by the SMP, and loads the service file to the memory.

In this example, a plurality of script generation modules 22 can be started on the SMP, each script generation module 22 respectively calls the FTP program performing module 24 to upload a service logic file to the corresponding SCP, wherein the number of the script generation modules 22 is the same as the number of the SCPs. For example, the FTP client on the SMP can write the STOR command (uploading a specified file to the FTP server from the client) into a script file in the tcl script language, and perform the script file, so as to upload the service logic files on the SMP to the SCPs through the FTP servers on the SCPs.

To sum up, the FTP client is separated from the application program, thus the embodiments of the present invention reduce the complexity when an application program implements the FTP operations, and effectively enhance the reliability and the stability of the FTP operations.

The above embodiments are only used to describe the technical solution of the present invention, instead of restricting the technical solution of the present invention, and the present invention is specifically described only with reference to the preferable embodiments. Those skilled in the art shall appreciate that amendments and equivalent substitutions may be made to the technical solution of the present invention, without departure from the scope of the technical solution of the present invention, and the amendments and equivalent substitutions shall be all included in the scope of the claims of the present invention.

## Claims

1. An implementing method of a File Transfer Protocol, FTP, client, applied in a Unix/Linux operating system,
**characterized in that** the method comprises steps of:
the FTP client writing an FTP operation request which is sent to an FTP server by the FTP client into a script file, wherein the script file is written in a tcl script language; and
the FTP client executing the script file to accomplish the FTP operation request of the FTP client for the FTP server.

2. The implementing method of an FTP client according to Claim 1, **characterized in that** after executing the script file, the method further comprises:
generating a result file of the script file;
judging whether the FTP operation request is successful according to information in the result file;
if the FTP operation is successful, continuing generating and executing a script file with a new FTP operation request written therein; if the FTP operation is unsuccessful, ending the current process.

3. The implementing method of an FTP client according to Claim 2, **characterized in that** before generating the result file of the script file, the method further comprises:
checking, by using a timeout detection mechanism, whether the result file is generated.

4. The implementing method of an FTP client according to any of Claims 1-3, **characterized in that** a method for naming the script file is: FTP request type + thread number + current time.tcl.

5. The implementing method of an FTP client according to Claim 4, **characterized in that** the FTP client on an interface message processor, IMP, generates script files corresponding to a plurality of service control points, SCPs, and downloads phone bill files from the plurality of SCPs through FTP servers on the plurality of SCPs; or the FTP client on a service management point, SMP, generates script files corresponding to a plurality of SCPs, and uploads service files in the SMP through FTP servers on the plurality of SCPs.

6. An FTP client, applied in a Unix/Linux system, **characterized in that** the FTP client comprises a script generation module and an FTP operation performing module, wherein,
the script generation module is configured to write an FTP operation request which is sent to an FTP server into a script file, wherein the script file is written in a tcl script language; and
the FTP operation performing module is configured to execute the script file to accomplish the FTP operation request for the FTP server.

7. The FTP client according to Claim 6, **characterized by**, further comprising:
a result file generation module, configured to generate, after the FTP operation performing module executes the script file, a corresponding result file;
a determining module, configured to judge whether the FTP operation request is successful according to information in the result file generated by the result file generation module; if the FTP operation request is successful, continue generating a script file with a new FTP operation request written therein, and call the FTP operation performing module to execute the script file; if the FTP operation request is unsuccessful, end the current process.

8. The FTP client according to Claim 7, **characterized in that** the result file generation module is also configured to check, by using a timeout detection mechanism, whether the result file is generated.

9. The FTP client according to any of Claims 6-8, **characterized in that** the script generation module is also configured to name the script file generated by the script generation module according to the following naming method: FTP request type + thread number + current time.tcl.

10. An interface message processor, IMP, **characterized by** comprising the FTP client according to any of Claims 6-9, wherein the FTP client is configured to generate script files corresponding to a plurality of service control points, SCPs, and download phone bill files from the plurality of SCPs through FTP servers on the plurality of SCPs.

11. A service management point, SMP, **characterized by** comprising the FTP client according to any of Claims 6-9, wherein the FTP client is configured to generate script files corresponding to a plurality of service control points, SCPs, and upload service files in the SMP through FTP servers on the plurality of SCPs.

## Patentansprüche

1. Implementierungsverfahren für einen File Transfer Protocol (FTP) client, angewendet in einem Unix/Linux Betriebssystem,
**dadurch gekennzeichnet,**
**dass** das Verfahren die folgenden Schritte aufweist:
der FTP client schreibt eine FTP Vorgangsanfrage in eine Skriptdatei, die durch den FTP client zum FTP Server gesendet wird, wobei die Skriptdatei in einer tcl Skriptsprache geschrieben ist, und der FTP client die Skriptdatei ausführt, um die FTP Vorgangsanfrage des FTP clients für den FTP Server auszuführen.

2. Implementierungsverfahren eines FTP clients gemäß Anspruch 1,
**dadurch gekennzeichnet,**
**dass** nach Ausführung der Skriptdatei das Verfahren weiterhin umfasst:
Erzeugen einer Ergebnisdatei der Skriptdatei;
beurteilend, ob die FTP Vorgangsanfrage erfolgreich gemäß der Informationen der Ergebnisdatei ist;
wenn der FTP Vorgang erfolgreich ist, Weiterführung der Erstellung und Ausführung einer Skriptdatei mit einer darin geschriebenen neuen FTP Vorgangsanfrage; wenn der FTP Vorgang nicht erfolgreich ist, Beendigung des laufenden Prozesses.

3. Ein Implementierungsverfahren eines FTP clients gemäß Anspruch 2,
**dadurch gekennzeichnet,**
**dass** vor dem Erzeugen der Ergebnisdatei auf der Skriptdatei, das Verfahren ebenfalls umfasst:
Kontrolle durch ein Time-Out-Erkennungsverfahren, ob die Ergebnisdatei erzeugt wurde.

4. Implementierungsverfahren eines FTP clients gemäß einem der Ansprüche 1 bis 3,
**dadurch gekennzeichnet,**
**dass** ein Verfahren zur Benennung der Skriptdatei ein: FTP Request Typ + thread Nummer + aktuelle Zeit.tcl. ist.

5. Implementierungsverfahren eines FTP clients gemäß Anspruch 4,
**dadurch gekennzeichnet,**
**dass** der FTP client auf einem Interface Message Prozessor (IMP) Skriptdateien erzeugt, entsprechend einer Vielzahl von Service Control Points (SCPs) und Phone Bill Files von einer Vielzahl von SCPs durch den FTP Server auf einer Vielzahl von SCPs herunterläd; oder der FTP client auf einem service management point (SMP) Skriptdateien erzeugt, entsprechend einer Vielzahl von SCPs und Services Files in den SMP durch FTP Server auf einer Vielzahl von SCPs hochläd.

6. Ein FTP client angewendet in einem Unix/Linux System,
**dadurch gekennzeichnet,**
**dass** der FTP client ein Skript Erstellungsmodul und ein FTP Vorgangsdurchführungsmodul aufweist, wobei das Skript Erstellungsmodul derart ausgestaltet ist, eine FTP Durchführung zu schreiben, welche an den FTP Server in die Skriptdatei gesendet wird, wobei die Skriptdatei in tcl Skriptsprache geschrieben ist und das FTP Vorgangsdurchführungsmodul derart ausgebildet ist, um die Skriptdatei auszuführen und die FTP Vorgangsanfrage für den FTP Server zu erreichen.

7. Ein FTP client gemäß Anspruch 6,
**dadurch gekennzeichnet, dass** dieser weiter aufweist:
ein Ergebnisdatei-Erstellungsmodul, ausgebildet, um eine entsprechende Ergebnisdatei zu erstellen, nachdem das FTP Vorgangsmodul, das die Skriptdatei ausführt; ein Entscheidungsmodul, ausgebildet, um zu beurteilen, ob die FTP Ausführungsnachfrage erfolgreich ist anhand der Informationen in der Ergebnisdatei,
erstellt durch das Ergebnisdatei-Erstellungsmodul; weiterlaufende Erstellung einer Skriptdatei mit einer neuen darin geschriebenen FTP Vorgangsanfrage, und Anfragen des FTP Vorgangsanfragemoduls, um die Skriptdatei auszuführen, wenn die FTP Vorgangsanfrage nicht erfolgreich ist, den vorliegenden Prozess zu beenden.

8. Ein FTP client gemäß Anspruch 7,
**dadurch gekennzeichnet,**
**dass** das Ergebnisdatei-Erstellungsmodul auch derart ausgestaltet ist, um durch einen Time-Out-Erkennungsmechanismus zu überprüfen, ob die Ergebnisdatei erzeugt ist.

9. Ein FTP client gemäß einem der Ansprüche 6 bis 8,
**dadurch gekennzeichnet,**
**dass** das Skript Erstellungsmodul ebenfalls ausgebildet ist, um die Skriptdatei, ausgestaltet durch das Skript Erstellungsmodul, gemäß der folgenden Namensmethode zu benennen: FTP Nachfragetyp + thread Nummer + Zeit.tcl.

10. Ein Interface Message Prozessor (IMP),
**dadurch gekennzeichnet,**
**dass** dieser den FTP client gemäß einer der Ansprüche 6 bis 9 aufweist, wobei der FTP client derart ausgeführt ist, die Skriptdatei zu erstellen gemäß einer Vielzahl von Service control points (SCPs) und Phone Bill Files von einer Vielzahl von SCPs durch den FTP Server auf einer Vielzahl von SCPs herunterzuladen.

11. Ein Service Management Point (SMP),
**dadurch gekennzeichnet,**
**dass** dieser einen FTP client gemäß einem der Ansprüche 6 bis 9 aufweist, wobei der FTP client derart ausgebildet ist, eine Skriptdatei zu erstellen gemäß einer Vielzahl von Service control points (SCPs) und Service Files in den SMP durch den FTP Server auf eine Vielzahl von SCPs hochzuladen.

## Revendications

1. Procédé de mise en oeuvre d'un client de protocole de transfert de fichiers, FTP, appliqué dans un système d'exploitation Unix/Linux, **caractérisé en ce que** le procédé comprend les étapes suivantes :
le client de protocole FTP écrivant une requête d'opération de protocole FTP qui est envoyée à un serveur de protocole FTP par le client de protocole FTP dans un fichier script, le fichier script étant écrit dans un langage de script tcl ; et
le client de protocole FTP exécutant le fichier script pour accomplir la requête d'opération de protocole FTP du client de protocole FTP pour le serveur de protocole FTP.

2. Procédé de mise en oeuvre d'un client de protocole FTP selon la revendication 1, **caractérisé en ce qu'**après l'exécution du fichier script, le procédé comprend en outre :
la génération d'un fichier de résultat du fichier script ;
l'évaluation du fait que la requête d'opération de protocole FTP est réussie selon l'information dans le fichier de résultat ;
si l'opération de protocole FTP est réussie, la poursuite de la génération et l'exécution d'un fichier script avec une nouvelle requête d'opération de protocole FTP écrite dans celui-ci ; si l'opération de protocole FTP n'est pas réussie, la fin du processus actuel.

3. Procédé de mise en oeuvre d'un client de protocole FTP selon la revendication 2, **caractérisé en ce qu'**avant la génération du fichier de résultat du fichier script, le procédé comprend en outre :
le contrôle, en utilisant un mécanisme de détection de dépassement de temps imparti, du fait que le fichier de résultat est généré.

4. Procédé de mise en oeuvre d'un client de protocole FTP selon l'une quelconque des revendications 1 à 3, **caractérisé en ce qu'**une méthode pour nommer le fichier script est : type de requête de protocole FTP + numéro de fil d'exécution + heure actuelle.tcl.

5. Procédé de mise en oeuvre d'un client de protocole FTP selon la revendication 4, **caractérisé en ce que** le client de protocole FTP sur un processeur de message d'interface, IMP, génère des fichiers script correspondant à une pluralité de points de commande de service, SCP, et télécharge des fichiers de facture téléphonique à partir de la pluralité de points SCP à travers les serveurs de protocole FTP sur la pluralité de points SCP ; ou le client de protocole FTP sur un point de gestion de service, SMP, génère des fichiers script correspondant à une pluralité de points SCP, et envoie des fichiers de service dans le point SMP à travers les serveurs de protocole FTP sur la pluralité de points SCP.

6. Client de protocole FTP, appliqué dans un système Unix/Linux, **caractérisé en ce que** le client de protocole FTP comprend un module de génération de script et un module de réalisation d'opération de protocole FTP,
le module de génération de script étant configuré pour écrire une requête d'opération de protocole FTP qui est envoyée à un serveur de protocole FTP dans un fichier script, le fichier script étant écrit dans un langage de script tcl ; et
le module de réalisation d'opération de protocole FTP étant configuré pour exécuter le fichier script pour accomplir la requête d'opération de protocole FTP pour le serveur de protocole FTP.

7. Client de protocole FTP selon la revendication 6, **caractérisé par**, comprenant en outre :
un module de génération de fichier de résultat, configuré pour générer, après que le module de réalisation d'opération de protocole FTP a exécuté le fichier script, un fichier de résultat correspondant ;
un module de détermination, configuré pour évaluer si la requête d'opération de protocole FTP est réussie selon l'information dans le fichier de résultat généré par le module de génération de fichier de résultat ; si la requête d'opération de protocole FTP est réussie, la poursuite de la génération d'un fichier script avec une nouvelle requête d'opération de protocole FTP écrite dans celui-ci, et l'appel du module de réalisation d'opération de protocole FTP pour exécuter le fichier script ; si la requête d'opération de protocole FTP n'est pas réussie, la fin du processus actuel.

8. Client de protocole FTP selon la revendication 7, **caractérisé en ce que** le module de génération de fichier de résultat est également configuré pour contrôler, en utilisant un mécanisme de détection de dépassement de temps imparti, si le fichier de résultat est généré.

9. Client de protocole FTP selon l'une quelconque des revendications 6 à 8, **caractérisé en ce que** le module de génération de script est également configuré pour nommer le fichier script selon la méthode de nommage : type de requête de protocole FTP + numéro de fil d'exécution + heure actuelle.tcl.

10. Processeur de message d'interface, IMP, **caractérisé par** le fait de comprendre le client de protocole FTP selon l'une quelconque des revendications 6 à 9, le client de protocole FTP étant configuré pour générer des fichiers script correspondant à une pluralité de points de commande de service, SCP, et télécharger des fichiers de facture téléphonique à partir de la pluralité de points SCP à travers les serveurs de protocole FTP sur la pluralité de points SCP.

11. Point de gestion de service, SMP, **caractérisé par** le fait de comprendre le client de protocole FTP selon l'une quelconque des revendications 6 à 9, le client de protocole FTP étant configuré pour générer des fichiers script correspondant à une pluralité de points de commande de service, SCP, et envoie des fichiers de service dans le point SMP à travers les serveurs de protocole FTP sur la pluralité de points SCP.
